# FASCICULE DE BREVET EUROPEEN

(11) **EP 0 480 317 B1**
(45) Date de publication et mention de la délivrance du brevet: **10.01.1996**
(21) Numéro de dépôt: 91116928.2
(22) Date de dépôt: 04.10.1991
(51) Int. Cl.: B22F 1/00

(54) **Matériau métallique aggloméré**
Agglomerierte Metallpulver
Agglomerated metallic powder

(30) Priorité: 10.10.1990 CH 3256/90
(43) Date de publication de la demande: 15.04.1992
(73) Titulaire: Eta SA Fabriques d'Ebauches, CH-2540 Granges (CH)
(72) Inventeur: Dinger, Rudolf, CH-2024 St-Aubin (CH); Soder, Robert, CH-1820 Montreux (CH); Willemin, Albert, CH-2525 Le Landeron (CH)
(74) Mandataire: de Raemy, Jacques

(56) Documents cités:
- CH-A- 0 538 721
- US-A- 4 194 040
- US-A- 4 595 558
- PATENT ABSTRACTS OF JAPAN vol. 9, no. 152 (M-391)(1875) 27 Juin 1985; & JP- A-60 029403 ( SUWA SEIKOSHA KK ) 14 Février 1985
- PATENT ABSTRACTS OF JAPAN vol. 5, no. 47 (M-61)(719) 28 Mars 1981; & JP-A-56 003603 ( DAINI SEIKOSHA KK ) 14 Janvier 1981

## Description

La présente invention est relative à un matériau métallique terminé constitué d'un agglomérat de poudre métallique finement divisée.

Dans la transformation traditionnelle des métaux en produits finis par utilisation d'empreintes, par exemple par fusion, forgeage, matriçage ou frittage, la précision dimensionnelle reste souvent insuffisante. La mise en oeuvre exige des installations onéreuses et de hautes qualifications professionnelles, ce qui rend la fabrication en grandes séries difficilement réalisable.

Dans la métallurgie des poudres, le métal finement divisé est moulé sous haute pression et soumis ensuite à un frittage thermique. Par frittage, on entend ici une opération effectuée dans la métallurgie des poudres pour réaliser une agglomération des produits traités, afin de leur donner une cohésion et une rigidité suffisante. Quand on chauffe à haute température des grains de poudre métallique mis en contact les uns avec les autres par compression, il se produit une véritable soudure des grains avant que ne soit atteinte leur température de fusion et l'on obtient une masse métallique rigide et compacte. Cependant, lors du démoulage et avant leur frittage, les pièces sont très sensibles à la manutention du fait de leur manque de cohésion. En outre, le frittage est accompagné d'un retrait relativement important qui exige des corrections au moule. Les petites pièces et celles présentant des formes complexes posent alors de multiples problèmes de fabrication et ce procédé a des limites déterminées.

Dans l'industrie horlogère, il a été souvent proposé de réaliser des boîtes de montre par la technique du frittage. Un exemple de boîte ainsi réalisée est décrite dans le document CH-A-538 721 où le problème du retrait est mentionné.

Le document US-A-4 194 040 revendique un matériau semi-terminé composé de poudre métallique dans laquelle sont mélangées 1 à 15 % de fibrilles de résine polytétrafluoréthylène. Ce matériau ne présente aucune résistance mécanique en tant que tel et il faudra le fritter à haute température pour lui conférer une bonne solidité ainsi qu'une aptitude à être usiné mécaniquement. D'ailleurs, lors de ce frittage, la résine formant liant entre grains de la poudre disparaît par pyrolyse et le matériau terminé est un matériau métallique à cent pour cent.

Le document US-A-4 595 558 revendique aussi un matériau semi-terminé sous forme de briquettes composées d'un mélange de poudre de manganèse et d'aluminium. A ce mélange est ajouté 0,5 part en volume de polyglycol. Ces briquettes sont ensuite trempées dans de l'aluminium fondu, ce qui a pour résultat un produit terminé présentant un alliage manganèse-aluminium, le polyglycol ayant complètement disparu.

On connaît par ailleurs des matériaux thermoplastiques chargés de poudre de métal et moulés par injection. Ces matériaux thermoplastiques exigent une viscosité de fusion apte à remplir complètement le moule. La proportion en métal ne peut guère dépasser environ 40 % en volume. Cela a pour conséquence que les propriétés caractéristiques des métaux s'estompent et que ce sont les propriétés caractéristiques des thermoplastiques qui dominent.

On connaît aussi le moulage par transfert d'un mélange d'une matière thermodurcissable avec de la poudre de métal finement divisée. Mais ici l'écoulement de la matière en fusion est de courte distance. Il est cependant possible de mouler des mélanges de plus haute viscosité en fusion, ce qui permet de proposer une plus haute proportion en métal mais ne dépassant guère 50 % en volume. On notera aussi que le durcissement d'un mélange par polyaddition ou par polycondensation doit se faire dans le moule même, ce qui rallonge considérablement les cycles de fabrication et conduit à une faible productivité. Ici également, ce sont les propriétés caractéristiques des matières thermodurcissables qui prédominent au détriment des propriétés caractéristiques des métaux.

Pour obvier aux inconvénients cités, la présente invention a pour objet un procédé tel que défini à la revendication 1 du brevet, les revendications 2 à 8 se rapportant à des modes de réalisation préférés du procédé (voit aussi les exemples 1 à 8). La présente invention concerne également un matériau métallique terminé tel que défini à la revendication 9 du brevet ainsi que l'utilisation de ce matériau dans des éléments de mécanisme de petite dimension.

L'invention sera comprise maintenant à l'aide de la description qui suit et du dessin qui l'illustre à titre d'exemple dans lequel :
- la figure 1 est un diagramme montrant les caractéristiques d'un matériau composé de métal et de matière thermoplastique, matériau dont on fait varier le pourcentage d'un des composants relativement à l'autre,
- la figure 2 est une coupe dans le matériau de l'invention après grossissement d'environ 1600 fois,
- la figure 3 montre une coupe schématique dans le matériau de l'invention, coupe fortement agrandie où deux grains métalliques, partiellement représentés, sont agglomérés ensemble au moyen d'une substance organique.

### Matériau

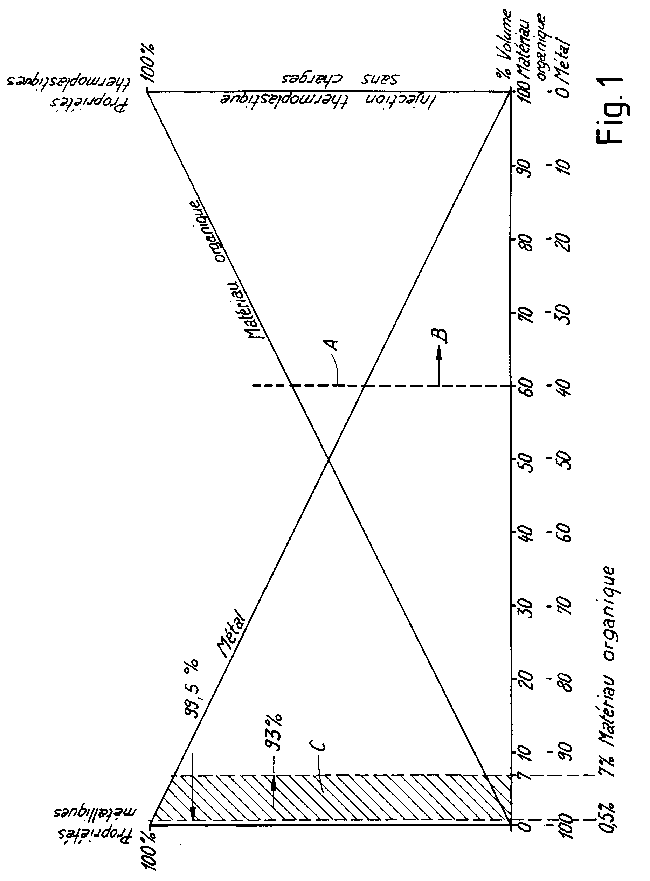

La figure 1 est un diagramme montrant les caractéristiques d'un matériau composé de métal et de matière thermoplastique, cette dernière servant de liant entre des grains dont le matériau métallique est constitué. On a tracé sur l'axe croissant des abcisses le pourcentage en volume occupé respectivement par le matériau métallique (de 100 % à 0 %) et par le matériau thermoplastique (de 0 % à 100 %). On a tracé en ordonnée une échelle de 0 à 100 % rendant compte des propriétés respectives du matériau métallique et du matériau thermoplastique. A gauche du diagramme et à l'endroit pour lequel le volume de métal est de 100 %, on comprendra qu'on a affaire à un matériau purement métallique, alors qu'à la droite de ce diagramme et à l'endroit pour lequel le volume du matériau thermoplastique est de 100 %, on a affaire à une pure injection de matière plastique sans aucune charge métallique. Entre ces deux états extrêmes ont été tracées deux droites qui se croisent et qui indiquent, pour une abcisse déterminée, si ce sont les propriétés métalliques ou les propriétés thermoplastiques qui dominent dans le matériau composite considéré. Ainsi, comme cela a été mentionné plus haut, un matériau composite composé de plus de 60 % de matériau thermoplastique (limite d'injectabilité thermoplastique, repère A du diagramme de la figure 1) présente, au fur et à mesure que ce pourcentage augmente et que diminue conjointement la teneur en métal (flèche B), des caractères dominants de cette matière plastique, les caractéristiques liées au métal s'estompant de plus en plus.

Le domaine couvert par la présente invention se trouve à gauche du diagramme de la figure 1 et est représenté par la zone hâchurée C. Dans cette zone, les grains composant la poudre métallique finement divisée sont liés ensemble au moyen d'une substance organique, le volume de cette substance étant compris entre 0,5 et 7 % du volume total du matériau. Conséquemment, la poudre métallique occupe respectivement un volume compris entre 99,5 et 93 % du volume total du matériau. On a donc affaire ici à un matériau à prédominance métallique avec toutes les propriétés qui en découlent comme par exemple bonne conductibilité, usinage aisé, bonne résistance à l'abrasion, etc.

Par substance organique liant les grains métalliques ensemble on englobe ici, comme cela apparaîtra dans les exemples qui seront donnés plus bas, les matières thermoplastiques (par exemple un polysulfone) et les matières thermodurcissables (par exemple une résine polyimide) ou encore un mélange des deux types de matières. Cependant, l'invention n'est pas limitée à ces types de matériaux, des monomères qu'on polymérise in situ pouvant être également employés.

On améliore considérablement la cohésion des grains métalliques ensemble et de ce fait la résistance mécanique de tout le matériau en recouvrant les grains d'une fine pellicule d'oxyde, de sulfure ou de séléniure. Cette pellicule peut se trouver naturellement à la surface des grains ou être créée artificiellement par exemple au moyen d'un courant d'air qui oxyde les grains. On comprendra que la pellicule en question améliore l'adhérence de la substance organique aux grains métallique en question.

Selon l'invention, et comme cela est mis en évidence sur la figure 1, le volume de substance organique liant les grains ensemble est compris entre 0,5 et 7 % en volume du volume total du matériau terminé. Ces deux limites résultent de très nombreux essais effectués sur un grand nombre d'échantillons. De ces essais, il résulte clairement que si le pourcentage de liant est inférieur à 0,5 %, la cohésion entre les grains n'est pas suffisante pour assurer la résistance mécanique du matériau. Celui-ci peut se casser ou s'effriter et il supporte mal des usinages (tournage, perçage) qu'on pourrait être amené à faire sur une ébauche sortant de moulage. De même, il ressort de ces essais qu'un pourcentage de liant supérieur à 7 % obtenu par la méthode préconisée plus loin n'est pas avantageuse. En effet, vu la forte pression appliquée au matériau, le liant serait chassé des interstices séparant les grains, le matériau présentant alors une exsudation indésirable qui tendrait à coller ensemble les pièces lors du durcissement ultérieur du liant, ce durcissement étant réalisé en vrac avec apport de chaleur. De même, un pourcentage dépassant 7 % offrirait un matériau qui présenterait des propriétés nettement moins intéressantes (résistance mécanique, conductibilité électrique) que celles obtenues avec le matériau de l'invention.

Un des buts très important que pousuit l'invention est d'obtenir un matériau ne présentant aucun retrait ou un retrait minime à sa sortie de moulage, ceci contrairement au frittage évoqué dans le préambule de cette description. On obtient ainsi directement des pièces bon marché et précises sans que des retouches ultérieures ne soient à envisager. En résumé, on peut obtenir des pièces présentant la même précision que celle obtenue en injectant des matières synthétiques, tout en conservant les propriétés et les caractéristiques des métaux.

### Procédé

Ce but est atteint en mettant en oeuvre le procédé de l'invention qui comporte, dans tous les cas envisagés, les étapes essentielles suivantes :
On produit un mélange contenant une poudre métallique finement divisée et au moins une substance organique dont la teneur en volume est comprise entre 0,5 et 7 % du matériau à l'état terminé. Par finement divisé, on entend ici une poudre métallique dont la granulométrie est généralement inférieure à 60 µm, à grains sphériques ou de forme quelconque. Tous les métaux peuvent être envisagés. Dans les exemples donnés plus loin, on a utilisé par exemple du bronze - étain, du laiton, de l'aluminium, du cuivre, de l'acier chrome - nickel ou encore du fer. On a déjà dit que la substance organique peut être une matière thermoplastique ou thermodurcissable, ou un mélange des deux ou encore un monomère.

Une fois le mélange réalisé, on introduit celui-ci dans un moule qui comporte généralement deux parties et dont les dimensions de la cavité correspondent exactement aux dimensions de la pièce terminée. On applique au moule une forte pression pendant un temps déterminé. La pression est de l'ordre de 8 à 15 tonnes par centimètre carré (t/cm²) et est appliquée pendant un temps variant de 5 à 10 secondes, ce qui permet donc une cadence rapide de production qui convient à une fabrication en grandes séries.

On démoule les pièces ainsi obtenues à cadence rapide et on les introduit, en vrac, dans un four dont la température est juste suffisante pour durcir la substance organique servant de liant entre les grains métalliques. Après un certain temps, on sort les pièces du four et on les laisse refroidir. Les pièces sont alors prêtes à subir, s'il y a lieu, des usinages usuels tels qu'on les pratique sur les métaux ordinaires.

La méthode qui vient d'être exposée donne dans les grandes lignes la conduite générale à suivre pour obtenir le matériau de l'invention. Cette méthode est cependant sujette à de multiples variations de détail dépendant du métal et de la substance organique utilisés, de la façon de réaliser le mélange, de l'adjonction d'agents particuliers permettant une meilleure adhérence de la substance organique sur les grains métalliques, etc.

On va donner maintenant quelques exemples non exhaustifs de méthodes précises qui ont été essayées avec succès.

### Exemple 1

993 g de bronze - étain (Cu/Sn 93.5/6.5) en grains sphériques calibrés à < 60 µm sont mélangés avec 7 g de polysulfone (polycondensation entre bisphénol-A et 4,4'-dichlordiphénylsulfone) en poudre. On ajoute à ce mélange du chlorure de méthylène + toluène (40/60 %-vol.). Après dissolution du polysulfone, on évapore le solvant en malaxant. Par calibrage à environ 200 µm, on obtient une poudre à mouler qui est placée dans un moule et pressée avec 12 t/cm². Les pièces démoulées sont ensuite durcies en vrac à 340°C pendant 10 minutes.

Dans cet exemple, la substance organique se présente sous forme de poudre qui est une matière thermoplastique (polysulfone). Une fois le premier mélange obtenu, on lui ajoute un solvant (chlorure de méthylène + toluène) pour dissoudre la substance organique et former ainsi une boue dont on évapore le solvant en le malaxant jusqu'à obtenir un second mélange qu'on introduit dans le moule. On comprendra que le solvant permet une répartition régulière de la substance organique autour des grains qui sont ainsi entourés d'une faible couche de matière liante une fois le solvant évaporé. Le matériau final comporte 95,4 % de métal et 4,5 % de substance organique (en volume).

### Exemple 2

992 g de laiton en semoule, calibrée à < 50 µm, sont chauffés à 260°C pendant 1/2 heure dans une étuve ventilée. Après refroidissement, on mélange le laiton oxydé en surface avec 8 g de PPS, polyphénylènesulfide (polycondensation entre p-dichlorbenzène et sulfure de sodium) sous forme de poudre très fine, calibrée à environ 5 µm. On ajoute à ce mélange le même solvant-dispersant mentionné dans l'exemple 1, additonnée de 0.2 % de polysulfone. L'évaporation du solvant et le moulage sous forte pression se font dans les mêmes conditions que dans l'exemple 1. Le durcissement thermique en vrac doit être fait à 380°C pendant 2 heures.

Pour augmenter la dureté de petites pièces, on prolonge le traitement thermique en présence d'air dans une étuve ventilée. Le degré de dureté dépend du temps de réticulation, qui est de 45 minutes à 2 heures à une température de 380°C.

Cet exemple diffère de l'exemple 1 notamment par le fait que les grains métalliques sont exposés à l'air avant leur mélange avec la substance organique. Après cette exposition, ils sont donc revêtus d'une fine pellicule d'oxyde. La substance organique est ici un matériau thermodurcissable (polyphénylènesulfide). Le matériau final comporte 95,1 % du métal et 4,9 % de substance organique (en volume). On notera qu'un durcissement supplémentaire est effectué par réticulation chimique en présence d'oxygène.

### Exemple 3

992 g d'aluminium en semoule calibrée à < 60 µm, sont mélangés avec une solution diluée d'un mélange de 5 g de résine bisphénol-A-glycidyléther addtionnée d'un durcisseur à base d'amine aromatique (par ex. m-phénylène-diamin) et de 3 g de résine polyvinylbutyral. Après l'évaporation du solvant et calibrage du résidu à environ 200 µm, la poudre à mouler est chauffée à 75°C et pressée avec 10 t/cm² dans un moule. Le durcissement des pièces moulées se fait en vrac à 170°C pendant 4 heures.

Dans cet exemple, la solution de substance organique (un thermodurcissable : résine bisphénol-A-glycidyléther) est mélangée à un matériau thermoplastique (résine polyvinylbutyral) pour servir de lubrifiant lors du mélange et faciliter le remplissage du moule. Le matériau final comporte 98,2 % de métal et 1,7 % de substance organique en volume.

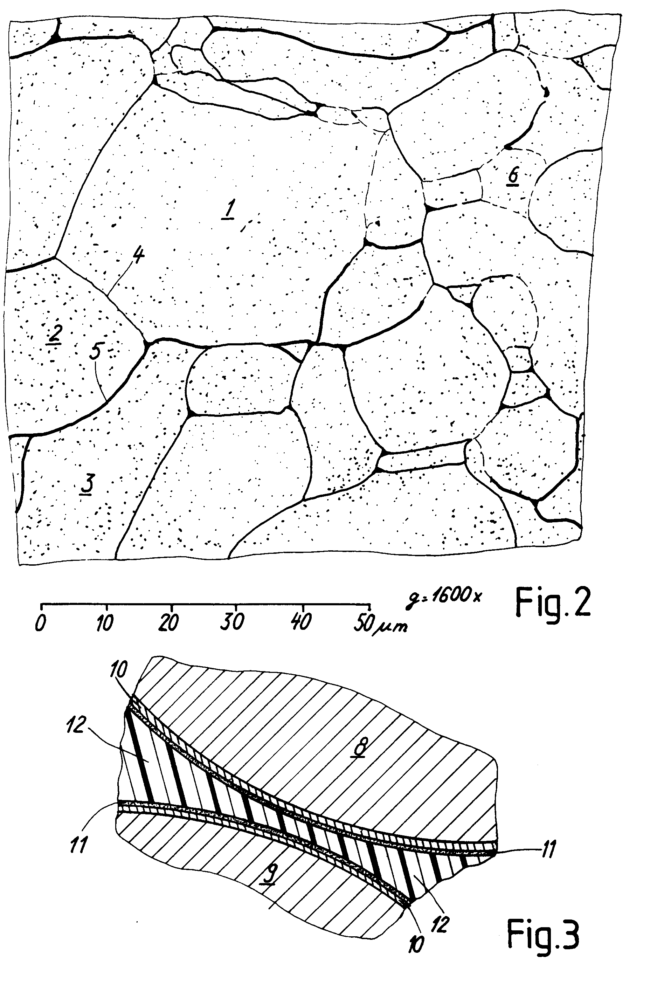

La figure 2 est une coupe dans le matériau réalisé selon cet exemple et selon une photographie effectuée avec un grossissement de 1600 fois. On voit que les grains sont séparés par des interstices d'épaisseur variable occupés par la substance organique. Lors du moulage la pression se répartit différemment entre les grains, chassant plus ou moins la substance organique dans des directions de moindre pression. Entre le grain 1 et le grain 2 par exemple, la frontière 4 est peu visible alors qu'elle est beaucoup plus marquée en 5 qui est l'interstice séparant le grain 2 du grain 3. En certains endroits les grains se touchent, par exemple le grain 6 est en contact direct avec les grains voisins.

### Exemple 4

993 g de cuivre en poudre de granulométrie < 50 µm sont traités en surface avec un promoteur d'adhésion chimique, du gamma-glycidoxypropyl-triméthoxysilane (par exemple "A-187" de UNION CARBIDE) en solution de 0.5 % dans de l'acétone. Après 1 heure de brassage à 50°C, on ajoute le liant qui entre également en solution, soit 3.5 g de résine époxyde cycloaliphatique (par exemple "ERL-4221" de UNION CARBIDE) et 3.5 g d'anhydride d'acide cis-hexahydrophthalique. Après l'évaporartion de l'acétone on obtient par calibrage une poudre à mouler à environ 200 µm, qui est formée sous haute pression. Le durcissement des pièces moulées se fait en vrac à 180°C pendant 2 heures.

Dans cet exemple, on mélange la poudre métallique finement divisée à un promoteur d'adhésion chimique en solution dans un solvant pour obtenir un premier mélange. Ce promoteur d'adhésion crée des liaisons chimiques entre métal et substance organique ou entre pellicule d'oxyde recouvrant le métal, si elle existe, et la substance organique. Ce promoteur a pour but d'augmenter fortement la résistance mécanique des pièces moulées. On ajoute au premier mélange une substance organique (ici un thermodurcissable sous forme de résine époxyde et d'anhydride) pour obtenir un second mélange qu'on sèche et malaxe jusqu'à obtenir un troisième mélange qui est la poudre à mouler proprement dite. Le matériau final comporte 94,8 % de métal et 5,2 % de substance organique en volume.

La figure 3 montre une coupe schématique faite dans le matériau de l'invention pour illustrer la cohésion entre deux grains 8 et 9 agglomérés selon cet exemple. Bien que les spécifications ci-dessus ne le mentionnent pas, les grains de cuivre 8 et 9 sont enveloppés d'une fine pellicule d'oxyde (entre 1 et 10 nm) obtenue naturellement et référencée 10. La pellicule d'oxyde est entourée à son tour par une pellicule de promoteur d'adhésion 11. Enfin les grains ainsi revêtus sont liés ensemble au moyen de la substance organique 12. On comprendra que le solvant utilisé n'apparaisse pas à la figure 3, celle-ci représentant le matériau terminé.

### Exemple 5

On procède comme dans l'exemple 4, mais avec une proportion de 990 g de cuivre pour 10 g de liant (5 g + 5 g). On ajoute au départ à la poudre de cuivre 20 g de wollastonite (beta-silicate de calcium, en microcristaux aciculaire, par exemple "CASIFLUX A-38" - marque déposée - de J. de POORTER B.V., Geertruidenberg/NL).

La wollastonite est une charge fibreuse de renforcement qui améliore la résistance mécanique du matériau. On notera qu à la place d'un monocristal aciculaire, on pourrait avoir de fines fibres de verre, de quartz, de carbone ou de graphite, le carbone et le graphite améliorant en même temps la conductivité électrique des pièces. Le matériau final comporte 93,5 % de métal et 6,5 % de substance organique.

### Exemple 6

990 g d'acier chrome - nickel 18/8 finement divisé, granulométrie < 60 µm, sont mélangés avec une solution de 10 g de résine polyimide (par exemple "KERIMIDE 1050" - marque déposée - de RHONE-POULENC) et 0.7 g de silane "A-187" (UNION CARBIDE), dans du N-méthylpyrrolidone/xylène, mélange 70/30 en volume. Le solvant est éliminé en brassant à 130°C et le résidu est calibré à environ 200 µm. A cette poudre à mouler, on ajoute un promoteur de conductibilité d'électricité, par exemple du noir de fumée de structure fibrillaire, "CORAX L" - marque déposée - de DEGUSSA. Ce mélange est brassé dans un tambour - mélangeur pendant environ 2 heures. Après le moulage sous une pression de 15 t/cm², on durcit les pièces démoulées en vrac à 250°C pendant 20 minutes, ensuite on recuit à 230°C pendant 8 heures.

Dans cet exemple, on mélange la substance organique (thermodurcissable, résine de polyimide) à un promoteur d'adhésion chimique (silane) et à un solvant (NMP/xylène). Ensuite seulement, on mélange la substance organique associée à la poudre métallique pour obtenir un premier mélange se présentant sous forme de boue dont on évapore le solvant en la malaxant avec apport de chaleur pour obtenir un second mélange. A ce second mélange, on ajoute, et c'est ce qui fait l'originalité du matériau selon cet exemple, un promoteur de conductibilité électrique, ici du noir de fumée, pour former un troisième mélange qu'on peut mouler. A la place du noir de fumée, on pourrait avoir des poudres métalliques d'argent, de cuivre, d'aluminium, de zinc ou de leur alliage. Généralement, le promoteur de conductibilité électrique améliore la conductibilité du matériau et facilite ainsi la métallisation galvanique des pièces terminées. Le matériau final comporte 94,6 % de métal et 5,4 % de substance organique.

### Exemple 7

990 g de fer en poudre calibrée à < 45 µm sont mélangés à une solution acétonique contenant :
- 10 g: polymère bisphénol-A-glycidyléther + anhydride d'acide cis-hexahydrophthalique + dicyandiamid
- 20 g: talc (hydrosilicate de magnésium)
- 5 g: hydrargillit (hydroxyde d'alumine)
Après élimination du solvant et séchage sous vide, la poudre à mouler est calibrée à environ 200 µm, formée sous pression de 12 t/cm² et, après démoulage, les pièces sont durcies à 160°C pendant 4 heures.

L'originalité à signaler ici est l'adjonction à la substance organique (polymère bisphenol + anhydride) et au solvant (acétone) d'une charge de structure lamellaire (talc, hydrargillit) qui sert de lubrifiant lors du moulage et facilite le remplissage du moule. Cette charge poursuit en fait le même but que le matériau thermoplastique utilisé à l'exemple 3.

### Exemple 8

992 g de bronze étain (Cu/Sn 93.5/6.5) en grains sphériques de diamètres < 60 µm, sont mélangés avec une solution de 0.3 % gamma-aminopropyltriéthoxysilane (promoteur d'adhésion "A-1100" de UNION CARBIDE) dans du propylèneglycol (1,2-propandiol, pt.éb. 189°C). Après 1 heure de brassage à 70°C, on ajoute le liant, soit 8 g de polyamide 6.6, type d'extrusion de haut poids moléculaire. Tout en brassant, on augmente la température du mélange jusqu'à 160°C, permettant la dissolution totale du polyamide. Ensuite, on refroidit lentement, sans arrêter le brassage, afin d'obtenir un maximum de cristallinité sphérolitique du polyamide 6.6 à la surface des grains de bronze. On récolte la poudre à mouler par filtration, lavage à l'eau et séchage. Les pièces sont moulées à 10 t/cm² et, après démoulage, durcies à 260°C pendant 10 minutes.

Dans cet exemple, on prépare une solution de promoteur d'adhésion chimique (A-1100) mélangée à un solvant (propyléneglycol). On mélange la poudre de bronze étain avec cette solution pour former un premier mélange. Après brassage avec apport de chaleur, on ajoute au premier mélange une substance organique (thermoplastique du type polyamide 6.6) pour obtenir un second mélange qu'on continue à brasser en élevant sa température jusqu'à dissolution de la substance organique. On récolte enfin un troisième mélange par filtration, lavage à l'eau et séchage, ce troisième mélange étant alors la poudre à mouler proprement dite.

### Utilisation

Il a déjà été signalé que le matériau de l'invention permet d'obtenir des pièces précises à bon marché et à cadence de production rapide, ces pièces pouvant être usinées après coup avec les moyens utilisés usuellement pour les métaux massifs.

On a également signalé que pour obtenir le matériau en question, il faut exercer sur le moule contenant la poudre composite à mouler une forte pression (jusqu'à 15 t/cm²).

Ce matériau sera donc utilisé avec succès pour des petites pièces devant être produites en grandes séries. On pense particulièrement à des pièces équipant des mécanismes de petites dimensions et parmi celles-ci spécialement à des pièces composant le mouvement d'une pièce d'horlogerie (platine, pont, pignon) ainsi que l'habillement d'une telle pièce (boîte, lunette, élément de bracelet).

## Revendications

1. Procédé de fabrication d'un matériau métallique terminé constitué d'un agglomérat de poudre métallique finement divisée, dans lequel
- on produit un mélange contenant une poudre métallique finement divisée et au moins un polymère organique, à l'exception des polymères organiques fluorés et des polyglycols et de leurs dérivés, la teneur en volume du polymère organique étant comprise entre 0,5 et 7 % du matériau à l'état terminé,
- on introduit ledit mélange dans un moule auquel on applique une pression d'au moins 8 tonnes/cm² et démoule le matériau ainsi obtenu qu'on maintient pendant un temps déterminé à une température suffisante pour durcir ledit polymère organique.

2. Procédé de fabrication du matériau selon la revendication 1 caractérisé par le fait qu'il comporte la succession des étapes suivantes :
a) on produit une poudre métallique finement divisée,
b) on produit ledit polymère organique sous forme de poudre,
c) on mélange ladite poudre métallique avec ledit polymère organique pour obtenir un premier mélange,
d) on ajoute audit premier mélange un solvant pour dissoudre le polymère organique et former ainsi une boue dont on laisse évaporer le solvant en la malaxant jusqu'à obtenir un second mélange qu'on introduit dans un moule,
e) on applique au moule ladite pression pour agglomérer ledit second mélange, ledit polymère organique liant les grains ensemble,
f) on démoule le matériau ainsi obtenu qu'on maintient pendant un temps déterminé à une température suffisante pour durcir le polymère organique.

3. Procédé de fabrication du matériau selon la revendication 1, caractérisé par le fait qu'il comporte la succession des étapes suivantes :
a) on produit une poudre métallique finement divisée,
b) on prépare une solution de polymère organique diluée dans un solvant, solution à laquelle on ajoute un matériau thermoplastique pour servir de lubrifiant lors du moulage et faciliter le remplissage total du moule,
c) on mélange ladite poudre métallique avec ladite solution pour obtenir un premier mélange se présentant sous la forme d'une boue dont on laisse évaporer le solvant en le malaxant jusqu'à obtenir un second mélange,
d) on chauffe le second mélange pour ramollir le polymère organique et on introduit ledit second mélange dans un moule,
e) on applique au moule ladite pression pour agglomérer ledit second mélange, ledit polymère organique liant les grains ensemble,
f) on démoule le matériau ainsi obtenu qu'on maintient pendant un temps déterminé à une température suffisante pour durcir le polymère organique.

4. Procédé de fabrication du matériau selon la revendication 1, caractérisé par le fait qu'il comporte la succession des étapes suivantes :
a) on produit une poudre métallique finement divisée,
b) on produit un promoteur d'adhésion chimique qu'on dissout dans un solvant,
c) on mélange pendant un temps déterminé ladite poudre métallique avec ledit promoteur d'adhésion dissout pour obtenir un premier mélange,
d) on ajoute audit premier mélange ledit polymère organique pour obtenir un second mélange se présentant sous la forme d'une boue dont on laisse évaporer le solvant en le malaxant jusqu'à obtenir un troisième mélange qu'on introduit dans un moule,
e) on applique au moule ladite pression pour agglomérer le troisième mélange, ledit polymère organique liant les grains ensemble et
f) on démoule le matériau ainsi obtenu qu'on maintient pendant un temps déterminé à une température suffisante pour durcir le polymère organique.

5. Procédé selon la revendication 4, caractérisé par le fait qu'on ajoute en outre à la poudre métallique produit à l'étape a) des charges fibreuses de renforcement.

6. Procédé de fabrication du matériau selon la revendication 1, caractérisé par le fait qu'il comporte la succession des étapes suivantes :
a) on produit une poudre métallique finement divisée,
b) on produit ledit polymère organique qu'on associe à un promoteur d'adhésion chimique et à un solvant,
c) on mélange ladite poudre métallique et ledit polymère organique associé pour obtenir un premier mélange se présentant sous la forme d'une boue dont on évapore le solvant en le malaxant avec apport de chaleur jusqu'à obtenir un second mélange,
d) on ajoute audit second mélange un promoteur de conductibilité électrique pour former un troisième mélange qu'on brasse pendant un temps déterminé,
e) on introduit ledit troisième mélange dans un moule auquel on applique ladite pression pour agglomérer ledit troisième mélange, ledit polymère organique liant les grains ensemble, et
f) on démoule le matériau qu'on maintient pendant un temps déterminé à une température suffisante pour durcir le polymère organique.

7. Procédé de fabrication du matériau selon la revendication 1, caractérisé par le fait qu'il comporte la succession des étapes suivantes :
a) on produit une poudre métallique finement divisée,
b) on prépare une solution dudit polymère organique diluée dans un solvant, solution à laquelle on ajoute une charge de structure lamellaire,
c) on mélange ladite poudre métallique avec ladite solution pour obtenir un premier mélange se présentant sous la forme d'une boue dont on élimine le solvant et qu'on sèche sous vide pour obtenir un second mélange qu'on introduit dans un moule,
d) on applique au moule ladite pression pour agglomérer ledit second mélange, ledit polymère organique liant les grains ensemble, et
e) on démoule le matériau ainsi obtenu qu'on maintient pendant un temps déterminé à une température suffisante pour durcir le polymère organique.

8. Procédé de fabrication du matériau selon la revendication 1, caractérisé par le fait qu'il comporte la succession des étapes suivantes :
a) on produit une poudre métallique finement divisée,
b) on prépare une solution de promoteur d'adhésion chimique mélangée à un solvant,
c) on mélange ladite poudre métallique avec ladite solution pour obtenir un premier mélange,
d) on brasse ledit premier mélange pendant un temps déterminé avec apport de chaleur après quoi on lui ajoute ledit polymère organique pour obtenir un second mélange,
e) on continue à brasser ledit second mélange en élevant sa température jusqu'à dissolution complète dudit polymère organique,
f) tout en continuant à brasser, on refroidit lentement pour récolter un troisième mélange par filtration, lavage à l'eau et séchage,
g) on introduit ledit troisième mélange dans un moule auquel on applique ladite pression pour agglomérer ledit troisième mélange, ledit polymère organique liant les grains ensemble, et
h) on démoule le matériau ainsi obtenu qu'on maintient pendant un temps déterminé à une température suffisante pour durcir le polymère organique.

9. Matériau métallique terminé obtenu selon le procédé de l'une quelconque des revendications 1 à 8.

10. Matériau selon la revendication 9, caractérisé par le fait que les grains sont revêtus d'une pellicule constituée d'un oxyde, d'un sulfure ou d'un séléniure.

11. Utilisation du matériau selon la revendication 9 ou 10 pour des éléments de mécanismes de petite dimension.

12. Utilisation du matériau selon la revendication 11, caractérisée par le fait que lesdits éléments sont des composants d'un mouvement de pièce d'horlogerie.

13. Utilisation du matériau selon la revendication 11, caractérisée par le fait que lesdits éléments sont des composants d'une boîte habillant une pièce d'horlogerie.

## Claims

1. Method of manufacture of a finished metallic material constituted by an agglomerate of finely divided metallic powder, in which
- a mixture is produced containing a finely divided metallic powder and at least one organic polymer, with the exception of fluorinated organic polymers and of polyglycols and of their derivatives, the volumic content of the organic polymer being comprised between 0.5 and 7 % of the material in the finished state,
- said mixture is introduced into a mould to which a pressure of at least 8 tons/cm² is applied and the thus obtained material is removed from the mould which is maintained during a predetermined time at a temperature sufficient to harden said organic polymer.

2. Method of manufacture of the material according to claim 1, characterized in that it includes the following sequence of steps :
a) a finely divided metallic powder is produced,
b) said organic polymer in powdered form is produced,
c) said metallic powder is mixed with said organic polymer in order to obtain a first mixture
d) a solvent is added to said first mixture in order to dissolve said organic polymer thus to form a sludge, the solvent of which is allowed to evaporate while it is kneaded until the obtaining of a second mixture which is introduced into a mould,
e) said pressure is applied to the mould in order to agglomerate said second mixture, said organic polymer bonding the grains together,
f) the thus obtained material is removed from the mould and is maintained during a predetermined time at a temperature sufficient to harden the organic polymer.

3. Method of manufacture of the material according to claim 1, characterized in that it includes the following sequence of steps :
a) a finely divided metallic powder is produced,
b) a solution of an organic polymer diluted in a solvent is prepared, to which is added a thermoplastic material in order to serve as lubricant during moulding and facilitate complete filling of the mould,
c) said metallic powder is mixed with said solution in order to obtain a first mixture having the form of a sludge, the solvant of which is allowed to evaporate while it is kneaded until the obtaining of a second mixture,
d) the second mixture is heated in order to soften the organic polymer and said second mixture is introduced into a mould,
e) said pressure is applied to the mould in order to agglomerate said second mixture, said organic polymer bonding the grains together,
f) the thus obtained material is removed from the mould and is maintained during a predetermined time at a temperature sufficient to harden the organic polymer.

4. Method of manufacture of the material according to claim 1, characterized in that it includes the following sequence of steps :
a) a finely divided metallic powder is produced,
b) a chemical adhesion promoter is produced and dissolved in a solvent;
c) during a predetermined time said metallic powder is mixed with said dissolved adhesion promoter in order to obtain a first mixture,
d) said organic polymer is added to said first mixture in order to obtain a second mixture having the form of a sludge, the solvent of which is allowed to evaporate while it is kneaded until the obtaining of a third mixture which is introduced into a mould,
e) said pressure is applied to the mould in order to agglomerate the third mixture, said organic polymer bonding the grains together, and
f) the thus obtained material is removed from the mould and is maintained during a predetermined time at a temperature sufficient to harden the organic polymer.

5. Method according to claim 4, characterized in that there is furthermore added fibrous reinforcing filler to the metallic powder produced in step a).

6. Method of manufacture of the material according to claim 1, characterized in that it includes the following sequence of steps :
a) a finely divided metallic powder is produced,
b) said organic polymer is produced associated with a chemical adhesion promoter and with a solvent,
c) said metallic powder and said associated organic polymer are mixed in order to obtain a first mixture having the form of a sludge, the solvent of which is evaporated in kneading it while applying heat until the obtaining of a second mixture,
d) an electrically conductivity promoter is added to said second mixture in order to form a third mixture which is stirred during a predetermined time,
e) said third mixture is introduced into a mould to which said pressure is applied in order to agglomerate said third mixture, said organic subtance bonding the grains together, and
f) the material is removed from the mould and is maintained during a predetermined time at a temperature sufficient to harden the organic polymer.

7. Method of manufacture of the material according to claim 1, characterized in that it includes the following sequence of steps :
a) a finely divided metallic powder is produced,
b) a solution of said organic polymer diluted in a solvent is produced to which is added a filler having a lamellar structure
c) said metallic powder is mixed with said solution in order to obtain a first mixture having the form of a sludge, from which the solvent is eliminated and which is dried under vacuum in order to obtain a second mixture which is introduced into a mould,
d) said pressure is applied to the mould in order to agglomerate said second mixture, said organic polymer bonding the grains together, and
e) the thus obtained material is removed from the mould and is maintained during a predetermined time at a temperature sufficient to harden the organic polymer.

8. Method of manufacture of the material according to claim 1, characterized in that it includes the following sequence of steps :
a) a finely divided metallic powder is produced,
b) a solution is prepared of a chemical adhesion promoter mixed with a solvent,
c) said metallic powder is mixed with said solution in order to obtain a first mixture,
d) said first mixture is stirred while applying heat during a predetermined time, following which an organic polymer is added in order to obtain a second mixture,
e) stirring of said second mixture is continued while raising the temperature until said organic polymer is completely dissolved,
f) stirring is further continued and slow cooling takes place in order to recover a third mixture by filtration, rinsing with water and drying,
g) said third mixture is introduced into a mould to which said pressure is applied in order to agglomerate said third mixture, said organic polymer bonding the grains together, and
h) the thus obtained material is removed from the mould and is maintained during a predetermined time at a temperature sufficient to harden the organic polymer.

9. Finished metallic material obtained according to the method of any one of claims 1 to 8.

10. Material according to claim 9, characterized in that the grains are coated with a film constituted by an oxide, a sulphide or a selenide.

11. Utilization of the material according to claim 9 or claim 10 for elements of small-dimension mechanisms.

12. Utilization of the material according to claim 11, characterized in that said elements are components of a timepiece movement.

13. Utilisation of the material according to claim 11, characterized in that said elements are components of a case for a timepiece.

## Patentansprüche

1. Herstellungsverfahren eines metallischen Fertigmaterials, gebildet von einer Agglomeration feinverteilten metallischen Pulvers, bei welchem
- man ein Gemisch herstellt, enthaltend ein feinverteiltes Metallpulver und mindestens einen organischen Polymer mit Ausnahme von organischen fluorierten Polymeren und Polyglykolen sowie Ableitungen von diesen, wobei der Volumengehalt des organischen Polymers zwischen 0,5 und 7% des fertiggestellten Materials ausmacht,
- man dieses Gemisch in eine Form einbringt, auf die man einen Druck von mindestens 8 t/cm² einwirken läßt, und das so erhaltene Material entformt, das man während einer vorbestimmten Zeit bei einer Temperatur hält, die ausreicht, um den organischen Polymer zu verfestigen.

2. Herstellungsverfahrens des Materials nach Anspruch 1, dadurch gekennzeichnet, daß es die folgende Abfolge von Schritten umfaßt:
a) man erzeugt ein feinverteiltes metallisches Pulver,
b) man erzeugt den organischen Polymer in Pulverform,
c) man mischt das metallische Pulver mit dem organischen Polymer zum Gewinnen einer ersten Mischung,
d) man fügt der ersten Mischung ein Lösungsmittel zu, um den organischen Polymer zu lösen und auf diese Weise einen Schlicker zu bilden, aus dem man das Lösungsmittel verdunsten läßt unter Rühren bis zum Gewinnen einer zweiten Mischung, die man in eine Form einsetzt,
e) man übt auf die Form den Druck aus, um die zweite Mischung zu agglomerieren, wobei der organische Polymer die Körner miteinander verbindet,
f) man entformt das so gewonnene Material, das man während einer vorbestimmten Zeit auf einer Temperatur hält, die ausreicht, um den organischen Polymer zu verfestigen.

3. Herstellungsverfahren des Materials nach Anspruch 1, dadurch gekennzeichnet, daß es die Abfolge der folgenden Schritte umfaßt:
a) man erzeugt ein feinverteiltes metallisches Pulver,
b) man bereitet eine Lösung des organischen, in einem Lösungsmittel gelösten Polymers vor, welcher Lösung man ein thermoplastisches Material zufügt, das als Schmiermittel bei der Formung dient, und zum Erleichtern der totalen Füllung der Form,
c) man mischt das metallische Pulver mit der Lösung zum Gewinnen einer ersten Mischung, die sich in Form eines Schlickers darstellt, aus dem man das Lösungsmittel unter Rühren verdunsten läßt bis zum Erhalten einer zweiten Mischung,
d) man erwärmt die zweite Mischung zum Erweichen des organischen Polymers und setzt die zweite Mischung in eine Form ein,
e) man unterwirft die Form dem Druck zum Agglomerieren der zweiten Mischung, wobei der organische Polymer die Körner miteinander verbindet,
f) man entformt das so erhaltene Material, das man während einer vorbestimmten Zeit bei einer Temperatur hält, die ausreicht, um den organischen Polymer zu erhärten.

4. Herstellungsverfahren des Materials nach Anspruch 1, dadurch gekennzeichnet, daß es die Abfolge der folgenden Schritte umfaßt:
a) man erzeugt ein feinverteiltes metallisches Pulver,
b) man erzeugt einen chemischen Adhäsionsbegünstiger, den man in einem Lösungsmittel auflöst,
c) man mischt während einer vorbestimmten Zeit das metallische Pulver mit dem gelösten Adhäsionsbegünstiger, um eine erste Mischung zu erhalten,
d) man fügt der ersten Mischung den organischen Polymer bei zum Gewinnen einer zweiten Mischung, die sich in Form eines Schlickers darbietet, aus dem man das Lösungsmittel unter Mischen verdunsten läßt bis zum Erhalten einer dritten Mischung, die man in eine Form einsetzt,
e) man läßt auf die Form den Druck einwirken zum Agglomerieren der dritten Mischung, wobei der organische Polymer die Körner miteinander verbindet, und
f) man entformt das so gewonnene Material, das man während einer vorbestimmten Zeit bei einer Temperatur hält, die ausreicht, um den organischen Polymer zu erhärten.

5. Verfahren nach Anspruch 4, dadurch gekennzeichnet, daß man ferner dem metallischen Pulver, hergestellt in Schritt a), einen Füllstoff in Form von Verstärkungsfasern zusetzt.

6. Herstellungsverfahren des Materials nach Anspruch 1, dadurch gekennzeichnet, daß es die Abfolge der folgenden Schritte umfaßt:
a) man erzeugt ein feinverteiltes metallisches Pulver,
b) man erzeugt den organischen Polymer, den man mit einem chemischen Adhäsionsbegünstiger und einem Lösungsmittel verbindet,
c) man mischt, das metallische Pulver und den organischen verbundenen Polymer zu Erhalten einer ersten Mischung in Form eines Schlickers, aus dem man das Lösungsmittel unter Mischen verdunsten läßt unter Zufuhr von Wärme bis zum Erhalten einer zweiten Mischung,
d) man fügt der zweiten Mischung einen die elektrische Leitfähigkeit begünstigenden Stoff zu zur Bildung einer dritten Mischung, die man während einer vorbestimmten Zeit rührt,
e) man setzt die dritte Mischung in eine Form ein, auf die man den Druck einwirken läßt zum Agglomerieren der dritten Mischung, wobei der organische Polymer die Körner miteinander verbindet, und
f) man entformt das Material, welches man während einer vorbestimmten Zeit bei einer Temperatur hält, die ausreicht zum Erhärten des organischen Polymers.

7. Herstellungsverfahren des Materials nach Anspruch 1, dadurch gekennzeichnet, daß es die Abfolge der folgenden Schritte umfaßt:
a) man erzeugt ein feinverteiltes metallisches Pulver,
b) man präpariert eine Lösung des organischen, in einem Lösungsmittel gelösten Polymers, welcher Lösung man einen Füllstoff laminarer Struktur beisetzt,
c) man mischt das metallische Pulver mit der Lösung zum Gewinnen einer ersten Mischung, die sich in Form eines Schlickers darbietet, aus dem man das Lösungsmittel eliminiert und den man unter Vakuum trocknet zum Gewinnen einer zweiten Mischung, die man in eine Form einsetzt,
d) man läßt den Druck auf die Form einwirken zum Agglomerieren der zweiten Mischung, wobei der organische Polymer die Körner miteinander verbindet, und
e) man entformt das so gewonnene Material, das man während einer vorbestimmten Zeit bei einer Temperatur hält, die ausreicht, um den organischen Polymer zu erhärten.

8. Herstellungsverfahren des Materials nach Anspruch 1, dadurch gekennzeichnet, daß es die Abfolge der folgenden Schritte umfaßt:
a) man erzeugt ein feinverteiltes metallisches Pulver,
b) man präpariert eine Lösung eines chemischen Adhäsionsbegünstigers, gelöst in einem Lösungsmittel,
c) man mischt das metallische Pulver mit der genannten Lösung zum Gewinnen einer ersten Mischung,
d) man rührt die erste Mischung während einer vorbestimmten Zeit unter Zufuhr von Wärme, wonach man den organischen Polymer zusetzt zum Gewinnen einer zweiten Mischung,
e) man setzt das Rühren der zweiten Mischung fort unter Erhöhung ihrer Temperatur bis zur vollständigen Lösung des organischen Polymers,
f) unter fortgesetztem Rühren kühlt man langsam ab zum Gewinnen einer dritten Mischung durch Filtration, Waschen mit Wasser und Trocknen,
g) man setzt die dritte Mischung in eine Form ein, die man dem Druck unterwirft zum Agglomerieren der dritten Mischung, wobei der organische Polymer die Körner miteinander verbindet, und
h) man entformt das so gewonnene Material, welches eine vorgegebene Zeit bei einer Temperatur gehalten wird, die für das Erhärten des organischen Polymers hinreicht.

9. Fertiggestelltes metallisches Material, erhalten nach dem Verfahren eines der Ansprüche 1 bis 8.

10. Material nach Anspruch 9, dadurch gekennzeichnet, daß die Körner mit einem Überzug versehen sind, bestehend aus einem Oxid, einem Sulfid oder einem Selenid.

11. Verwendung des Materials nach Anspruch 9 oder 10 für Elemente von kleindimensionierten Mechanismen.

12. Verwendung des Materials nach Anspruch 11, dadurch gekennzeichnet, daß die Elemente Bestandteile eines Werks eines Zeitmeßgerätes sind.

13. Verwendung des Materials nach Anspruch 11, dadurch gekennzeichnet, daß die Elemente Bestandteile eines Gehäuses sind, das ein Zeitmeßgerät umschließt.
